# EUROPÄISCHE PATENTSCHRIFT

(11) **EP 1 357 062 B1**
(45) Veröffentlichungstag und Bekanntmachung des Hinweises auf die Patenterteilung: **18.02.2009**
(21) Anmeldenummer: 03009227.4
(22) Anmeldetag: 23.04.2003
(51) Int. Cl.: B65G 1/04

(54) **Lagerfahrzeug und Lager für ein derartiges Lagerfahrzeug**
Satellite car and shelf storage for such a satellite car
Chariot de transport pour rayonnages d'entrepôt et entrepôt à rayonnages pour un tel chariot

(30) Priorität: 23.04.2002 DE 20206372 U
(43) Veröffentlichungstag der Anmeldung: 29.10.2003
(73) Patentinhaber: Westfalia Logistics Technologies GmbH & Co. KG, 33829 Borgholzhausen (DE)
(72) Erfinder: Upmeyer, Ulrich, 33829 Borgholzhausen (DE)
(74) Vertreter: Philipp, Matthias

(56) Entgegenhaltungen:
- EP-A- 0 197 448
- EP-A- 1 103 494
- US-A- 4 643 628

## Beschreibung

Die Erfindung betrifft ein Lagerfahrzeug zum Betrieb in einem Regallager, sowie ein Lager für Gegenstände mit vorgegebenen Abmessungen, insbesondere Behälter für Kleinteile, mit Lagerkanälen zum Aufnehmen der Gegenstände und zum Verfahren eines Lagerfahrzeugs nach der Erfindung.

Aus dem Gebrauchsmuster DE 94 08 348 U1 ist ein automatisches Kleinteilelager mit einem Regalfahrzeug bekannt, das eine vertikal verfahrbare Hebebühne mit einem in einen Lagerkanal unter einen dort gelagerten Gegenstand fahrbaren Lagerfahrzeug mit Hubvorrichtung zum Anheben des Gegenstands aufweist, wobei der Lagerkanal mit Führungen für das Lagerfahrzeug versehen ist. Dieses Lager ist dahingehend nachteilig, daß die Bauhöhe des ßLagerfahrzeugs relativ groß ist, wodurch jeder einzelne Lagerkanal unterhalb der Lagerebene der Gegenstände einen entsprechend hohen Freiraum aufweisen muß, damit das Lagerfahrzeug zumindest teilweise unter einen Gegenstand fahren, diesen anheben und entlang des Lagerkanals verfahren kann.

Aus der EP 1 103 494 A1 ist ein Lager gemäß dem Oberbegriff des Anspruchs 16 bekannt.

Der Erfindung liegt die Aufgabe zugrunde, ein Lagerfahrzeug zum Betrieb in einem Regallager anzugeben, dessen Bauhöhe reduziert ist, so daß die Lagerungsdichte in einem Lager, in dem das Lagerfahrzeug betrieben wird, vergrößert werden kann.

Diese Aufgabe wird erfindungsgemäß durch ein Lagerfahrzeug zum Betrieb in einem Regellager gelöst, mit einer mit mindestens einem Antriebsmotor und Laufrädern versehenen Fahreinheit und einer mit Tragrädern und einer anheb- und absenkbaren Hubplattform versehenen Hubeinheit, wobei die Laufräder eine größere Spurweite als die Tragräder aufweisen und zum Abrollen auf einer Laufebene angeordnet sind, die oberhalb einer Tragebene liegt, auf der die Tragräder abrollen.

Durch diese funktionale Trennung von Fahreinheit, die alle für den Antrieb zuständigen Elemente enthält, und Hubeinheit, die lediglich die für das Anheben eines Gegenstands erforderlichen Elemente enthält, kann die Hubeinheit flacher als bisher ausgeführt werden, und zusammen mit der erfindungsgemäßen Spurweiten- und Höhenstufung der Lauf- und Tragräder kann der vertikale Abstand benachbarter Lagerkanäle verkleinert werden.

Bevorzugt ist vorgesehen, daß die Laufebene einen vertikalen Abstand von der Tragebene aufweist, der mindestens einer Bauhöhe der Hubeinheit entspricht. Mit dieser Maßnahme ergibt sich eine besonderes günstige Anordnung in einem Lagerkanal und ein minimaler vertikaler Abstand benachbarter Lagerkanäle.

Da das Lagerfahrzeug aufgrund der Trennung der erforderlichen Komponenten in Hub- und Fahreinheit eine größere Baulänge aufweist als ein herkömmlich ausgeführtes Lagerfahrzeug, ist es zweckmäßig, wenn Fahreinheit und Hubeinheit über eine flexible Kopplung miteinander verbunden sind, um Übergänge, beispielsweise zwischen einem Regelfahrzeug und dem Beginn eines Lagerkanals, besser überbrücken zu können.

Die Kupplung kann eine Winkelverlagerung zwischen Fahr- und Hubeinheit um eine horizontale und/oder eine vertikale Achse ermöglichen. Ferner kann die Kopplung eine Winkelverlagerung zwischen Fahr- und Hubeinheit um eine vertikale Achse ermöglichen.

Außerdem kann die Kupplung eine begrenzte Relativbewegung zwischen Fahr- und Hubeinheit in vertikaler und/oder horizontaler Richtung ermöglichen.

Es kann vorgesehen sein, daß Fahr- und Hubeinheit kardanisch miteinander verbunden sind.

In einer Ausgestaltung kann vorgesehen sein, daß die Hubeinheit schwenkbar an einem an der Fahreinheit vertikal verlagerbaren Befestigungsschlitten angelenkt ist.

Bevorzugt sieht die Erfindung, daß ein Hubantrieb zum Anheben und Absenken der Hubplattform in der Fahreinheit integriert ist. Dies bedeutet, daß lediglich noch gewisse mechanische Komponenten in der Hubeinheit vorhanden sein müssen, während der motorische Antrieb in der Fahreinheit angeordnet ist. Dadurch wird eine weitere Reduzierung der Bauhöhe der Hubeinheit erreicht.

Zweckmäßigerweise ist vorgesehen, daß der Antriebsmotor auf mindestens eines der Laufräder und/oder auf mindestens eines der Tragräder wirkt.

In einer zweckmäßigen Ausgestaltung kann vorgesehen sein, daß die Hubeinrichtung eine Unterplatte und eine die Hubplattform tragende oder bildende Oberplatte aufweist, wobei Unter- und Oberplatte durch einen Hubantrieb gegeneinander bewegbar sind. Hierbei können zwischen Unter- und Oberplatte Keilflächen angeordnet sein, die bei einer horizontalen Relativbewegung zwischen Ober- und Unterplatte eine Vertikalbewegung der Oberplatte bzw. der Hubplattform bewirken.

Bevorzugt sieht die Erfindung vor, daß Fahr- und/oder Hubeinheit mit seitlichen Führungsrädem versehen sind.

Die Laufräder können einen größeren Durchmesser als die Tragräder aufweisen.

Zweckmäßigerweise ist an einer Stirnseite der Hubeinrichtung ein Sicherungsriegel für einen transportierten Gegenstand angeordnet, der bei abgesenkter Hubplattform eingezogen und bei angehobener Hubplattform ausgefahren ist. Der Sicherungsriegel kann durch die Bewegung der Unter- und Oberplatte zwangsgesteuert sein.

Der Erfindung liegt ferner die Aufgabe zugrunde, ein Lager zum Verfahren eines Lagerfahrzeugs nach der Erfindung anzugeben.

Diese Aufgabe der Erfindung wird ferner durch ein Lager für Gegenstände mit vorgegebenen Abmessungen, insbesondere Behälter für Kleinteile, gelöst, mit horizontalen Lagerkanälen zur Aufnahme der Gegenstände und zum Verfahren eines Lagerfahrzeugs nach der Erfindung, wobei jeder Lagerkanal zwei einander gegenüberliegend angeordnete Tragprofile aufweist, die jeweils zwei einen horizontalen und einen vertikalen Abstand und somit unterschiedliche Spurweite aufweisende, horizontale Laufbahnen bilden, und wobei

die Tragprofile jeweils vier W-förmig abwechselnd um 90° gegeneinander abgewinkelte Abschnitte aufweisen, von denen ein erster vertikal an einer Seitenwand anliegt und an dieser befestigt ist und zwei horizontal angeordnet sind und die Laufbahnen bilden.

Ein zwischen den horizontal angeordneten Abschnitten liegender vertikaler Abschnitt kann eine seitliche Führungsfläche für ein in dem Lagerkanal betriebenes Lagerfahrzeug bilden.

Die Erfindung wird nachfolgend anhand eines Ausführungsbeispiels erläutert, wobei auf eine Zeichnung Bezug genommen ist, in der
Fig. 1 eine schematische Draufsicht auf ein erfindungsgemäßes Kleinteilelager mit zwei Lagerregalen und einem dazwischen horizontal verfahrbaren Regalfahrzeug zeigt;
Fig. 2 schematisch und ausschnittsweise einen Vertikalschnitt durch einen Bereich des Lagerregals nach Fig. 1 zeigt;
Fig. 3 eine schematische Seitenansicht mehrerer vertikal übereinander angeordneter Lagerkanäle sowie eines Lagerfahrzeugs zeigt;
Fig. 4 eine perspektivische Ansicht eines in einem Lagerkanal befindlichen Lagerfahrzeugs zeigt;
Fig. 5 eine perspektivische Ansicht eines Lagerfahrzeugs zeigt;
Fig. 6 eine Seitenansicht des Lagerfahrzeugs nach Fig. 5 zeigt;
Fig. 7 eine Draufsicht auf das Lagerfahrzeug nach Fig. 5 zeigt;
Fig. 8 und 9 perspektivische Ansichten eines vertikal verfahrbaren Lastaufnahmemittels bzw. Schlittens eines erfindungsgemäßen Regalfahrzeugs zeigt.

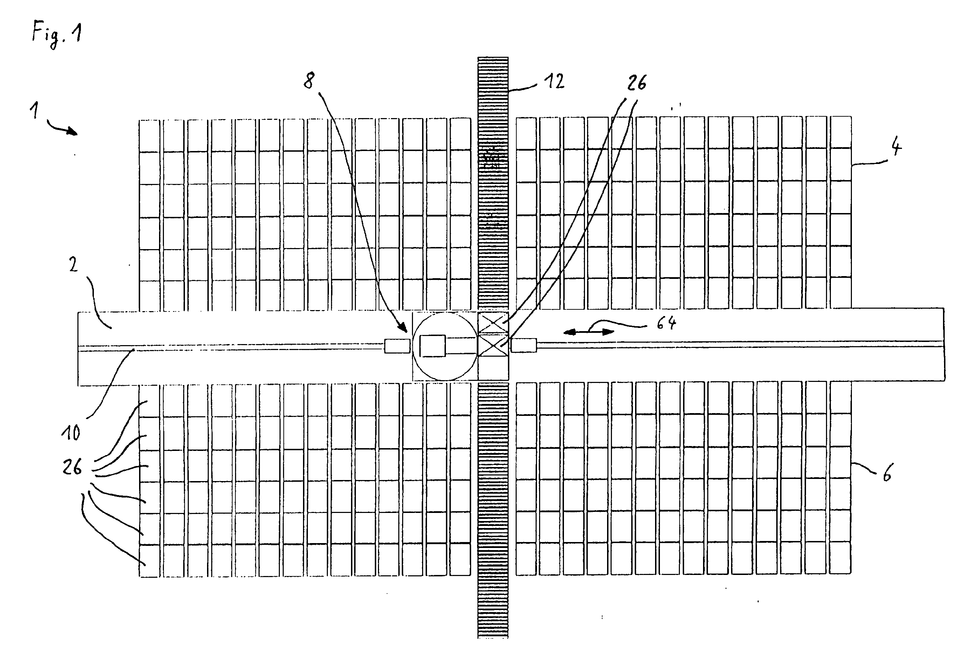

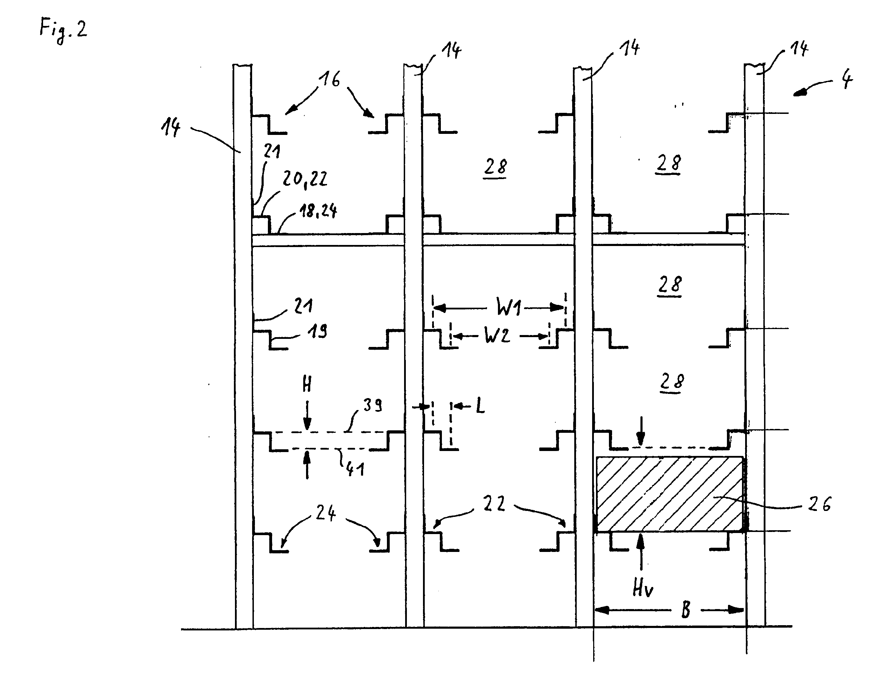

Unter Bezugnahme auf Fig. 1 und 2 wird nachfolgend ein erfindungsgemäßes Lager erläutert, bei dem es sich um ein kompaktes Kleinteilelager handelt. Das im ganzen mit 1 bezeichnete Lager weist beiderseits einer Gasse 2 (mindestens) zwei Lagerregale 4, 6 auf, die von einem Regalfahrzeug 8 bedient werden, welches entlang der Gasse 2 in horizontaler Richtung (Längs- bzw. Verfahrrichtung) 64 auf einer Schiene 10 verfahrbar ist und ein erfindungsgemäßes Lagerfahrzeug aufnehmen und von einem Lagerkanal zu einem anderen bringen kann.

In einem mittleren Bereich der Lagerregale 4, 6 ist eine Fördereinrichtung 12 zum horizontalen Transportieren von ein- oder auszulagernden Gegenständen 26 von bzw. zu dem Regalfahrzeug 8 vorgesehen.

Die Lagerregale 4, 6 bilden eine Vielzahl von vertikal übereinander angeordneten Lagerplätzen entlang von Lagerkanälen, deren Struktur sich aus einem schematischen Vertikalschnitt durch ein Lagerregal gemäß Fig. 2 ergibt. Zwischen benachbarten, vertikalen Seitenwänden 14 sind mit regelmäßigen vertikalen Abständen horizontale Tragprofile 16 paarweise einander gegenüberliegend angeordnet, deren horizontal verlaufende Abschnitte 18, 20 mit ihren jeweiligen Oberseiten zwei Laufbahnen 22, 24 mit einem vertikalen Abstand H bilden.

Wie Fig. 2 erbennen läßt, sind die Laufbahnen 22, 24 durch zwei einander gegenüberliegende, doppelt L-förmig bzw. insgesamt W-förmig abgewinkelte Tragprofile 16 mit vertikalen Abschnitten 19, 21 und horizontalen Abschnitten 18, 20 gebildet, wobei der äußerste, vertikale Abschnitt 21 eines Tragprofils jeweils an einer Seitenwand 14 fixiert ist. Durch die gezeigte Anordnung weisen die Laufbahnen 22, 24 einerseits einen vertikalen Abstand H und andererseits einen horizontalen (Mitten-)Abstand L bzw. unterschiedliche Spurweiten W1, W2 auf. Auf den jeweils oberen Laufbahnen 22 können Gegenstände 26 gelagert werden, deren maximale Breite im wesentlichen durch den lichten Abstand B zweier benachbarter Seitenwände 14 und deren maximale Höhe durch den vertikalen Abstand Hv zwischen einer Laufbahn 22 und dem unteren Ende der darüber angeordneten Tragprofile 16 (jeweils abzüglich eines Handhabungsabstands) festgelegt ist. Beispielsweise könnte der lichte Abstand B zwischen zwei Seitenwänden 14 420 mm betragen und alle 270 mm ein Tragprofil 16 angeordnet sein, so daß Gegenstände mit einer maximalen Breite von 400 mm und einer maximalen Höhe von 200 mm eingelagert werden können, wenn der vertikale Abstand zwischen benachbarten Laufbahnen 22, 24 50 mm beträgt.

Zwischen jeweils zwei horizontal und vertikal benachbarten Tragprofilen 16 ist somit jeweils ein Lagerkanal 28 gebildet, in dem in horizontaler Richtung hintereinander eine Anzahl von einzelnen Gegenständen 26 gelagert werden können, wie dies in Fig. 1 angedeutet ist.

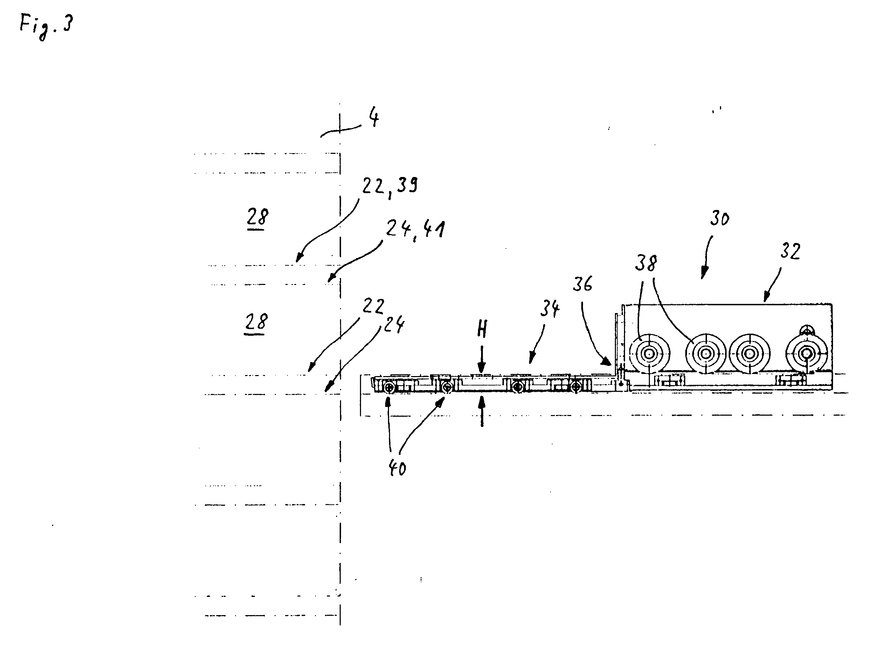

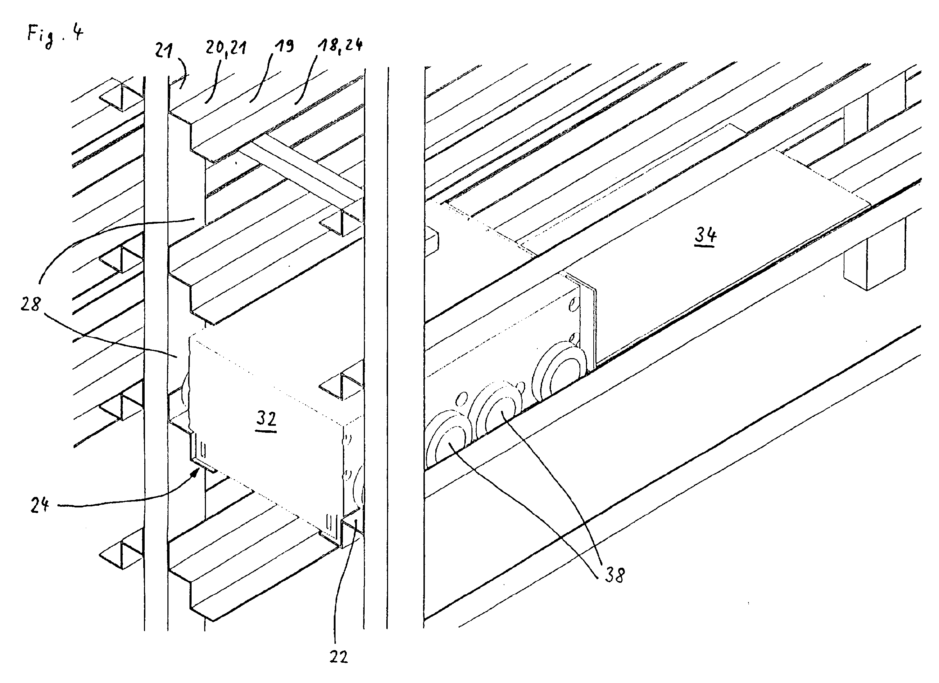

Fig. 3 und 4 erläutern anhand einer schematischen Seitenansicht und einer perspektivischen Ansicht den grundsätzlichen Aufbau eines erfindungsgemäßen Lagerfahrzeugs 30 und dessen Betrieb in einem Lagerregal 4 bzw. einem Lagerkanal 28.

Fig. 3 zeigt in Seitenansicht ein lediglich angedeutetes Lagerregal 4 mit Lagerkanälen 28 und zugehörigen Laufbahnen 22, 24 sowie ein zur Einfahrt in einen Lagerkanal 28 bereitstehendes Lagerfahrzeug 30. Das Lagerfahrzeug 30 ist aus einer Fahreinheit 32 und einer Hubeinheit 34 gebildet, die über eine winkelbewegliche Kopplung 36 miteinander verbunden sind. Die Fahreinheit 32 läuft auf Laufrädern 38, während die Hubeinheit 34 auf Tragrädern 40 läuft.

Wie man anhand Fig. 4 erkennt, nimmt die Fahreinheit 32 im wesentlichen den gesamten zur Einlagerung eines Gegenstandes 26 zur Verfügung stehenden freien Querschnitt innerhalb eines Lagerkanals 28 ein, wobei die Laufräder 38 auf den oberen Laufbahnen 22 rollen, die einer Laufebene 39 entsprechen. Die Tragräder 40 der Hubeinheit 34 laufen auf den unteren Laufbahnen 24, die einer Tragebene 41 entsprechen. Die Hubeinheit 34 befindet sich vollständig unterhalb der oberen Laufbahnen 22 bzw. der Laufebene 39 und kann dadurch vollständig unter auf den Laufbahnen 22 lagernde Gegenstände 26 bewegt werden und diese durch geringfügiges Anheben aufnehmen, transportieren und an beliebiger Stelle absetzen.

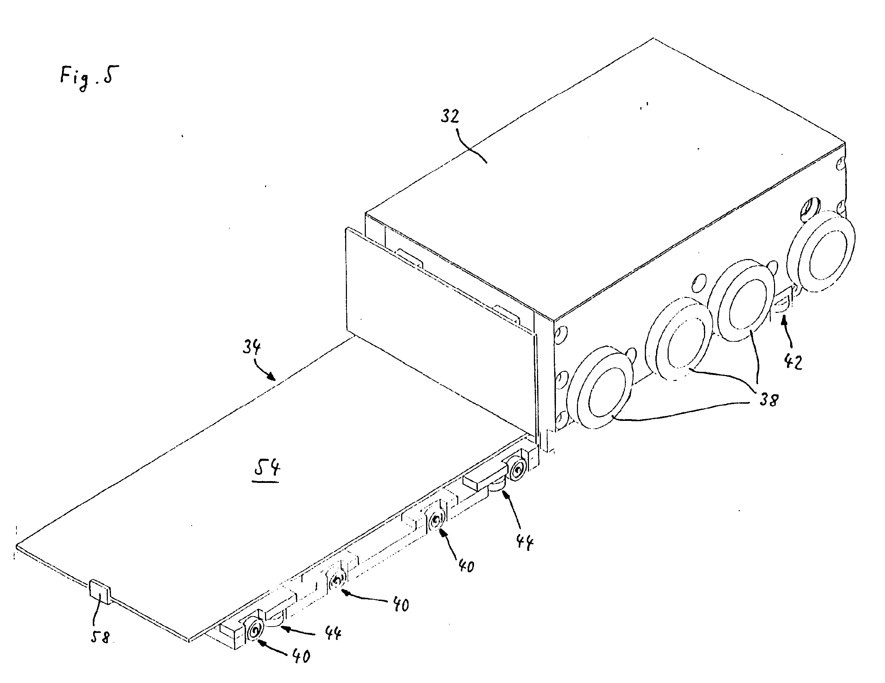

Fig. 5 bis 7 erläutern den Aufbau eines erfindungsgemäßen Lagerfahrzeugs mehr im einzelnen. Die Fahreinheit 32 enthält alle für die Fahr- und Hubfunktionen erforderlichen Komponenten, insbesondere einen Antriebsmotor für die Laufräder 38 sowie einen Hubantrieb zum Anheben und Absenken einer Hubplattform 54 der Hubeinheit 34. Neben den Laufrädern 38 weist die Fahreinheit 32 seitliche Führungsräder 42 auf, die im Betrieb an den vertikalen, zwischen den horizontalen Abschnitten 18 und 20 befindlichen Abschnitten 21 der Tragprofile 16 abrollen und für eine seitliche Führung sorgen. Die Laufräder 38 haben eine Spurweite W1, die größer ist als eine Spurweite W2 der Tragräder 40.

Die Hubeinheit 34 ist besonders flach mit minimaler Bauhöhe h ausgeführt, was dadurch möglich ist, daß sämtliche Antriebskomponenten innerhalb der Fahreinheit 32 untergebracht sind. Außer den Tragrädern 40 weist auch die Hubeinheit 34 Führungsräder 44 auf, die im Betrieb ihrerseits an den vertikalen Abschnitten 19 der Tragprofile 16 abrollen.

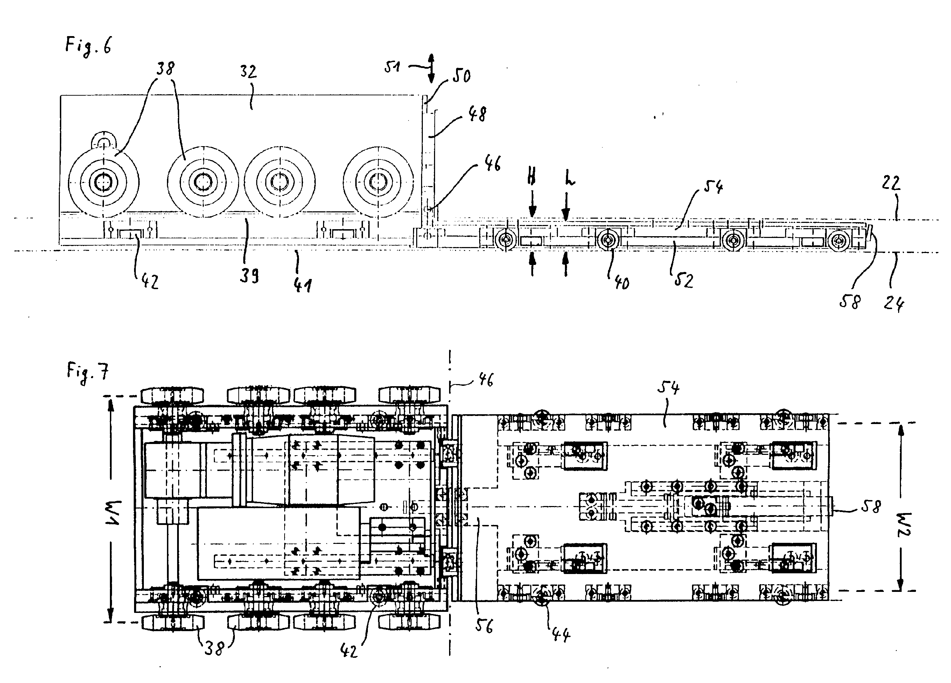

Die winkelbewegliche und höhenverlagerbare Kopplung 36 zwischen Fahr- und Hubeinheit ist dadurch realisiert, daß die Hubeinheit 34 um eine horizontale Schwenkachse 46 (Fig. 6) schwenkbar an einem Befestigungsschlitten 48 angelenkt ist, der seinerseits entlang einer Führung 50 in vertikaler Richtung 51 frei verschieblich an einer Stirnseite der Fahreinheit 32 gehalten ist. Aufgrund dieser Anlenkung ist sowohl ein Höhen- als auch ein Winkelausgleich zwischen Fahr- und Hubeinheit möglich, der bspw. dann erforderlich sein kann, wenn das Lagerfahrzeug, wie in Fig. 3 angedeutet ist, bspw. von einem Regalfahrzeug in einen Lagerkanal einfährt oder umgekehrt, wobei geringe Höhendifferenzen zwischen benachbarten Tragprofilen vorhanden sein können.

Wie Fig. 6 erkennen läßt, weist die Hubeinheit 34 eine Unterplatte 52 und eine die Hubplattform bildende Oberplatte 54 auf, wobei die Oberplatte an der Schwenkachse 46 angelenkt ist und die Unterplatte die Tragräder 40 trägt und über ein Verbindungsmittel 56 mit einem Hubantrieb in der Fahreinheit 32 verbunden ist. Zwischen Unter- und Oberplatte 52, 54 sind Keilflächen angeordnet, die bei einer durch den Hubantrieb veranlaßten Horizontalbewegung der Unterplatte 52 (Relativbewegung zwischen Ober- und Unterplatte) eine Vertikalbewegung der Oberplatte 54 bewirken (Anheben oder Absenken).

An einer freien Stirnseite der Hubeinrichtung ist ein Sicherungsriegel 58 angeordnet, der der Sicherung eines auf der Hubplattform bzw. Oberplatte 54 aufgenommenen Gegenstands gegen Abrutschen dient und der bei abgesenkter Hubplattform eingezogen ist (Fig. 6) und bei angehobener Hubplattform ausgefahren ist (Fig. 5). Der Sicherungsriegel 58 wird durch die Relativbewegung zwischen Ober- und Unterplatte automatisch gesteuert. Der Hubantrieb kann bspw. durch einen Elektrospindelmotor gebildet sein.

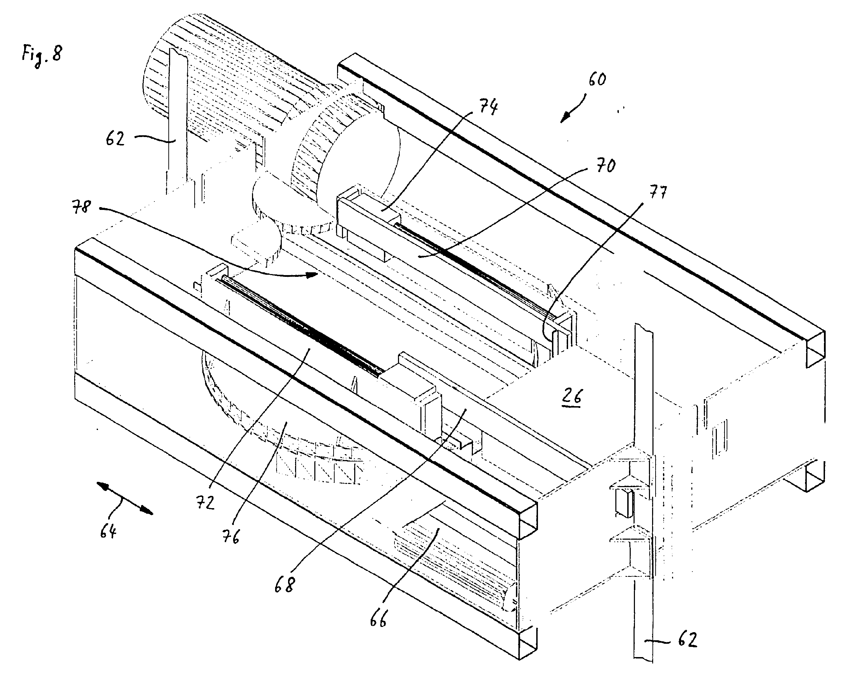

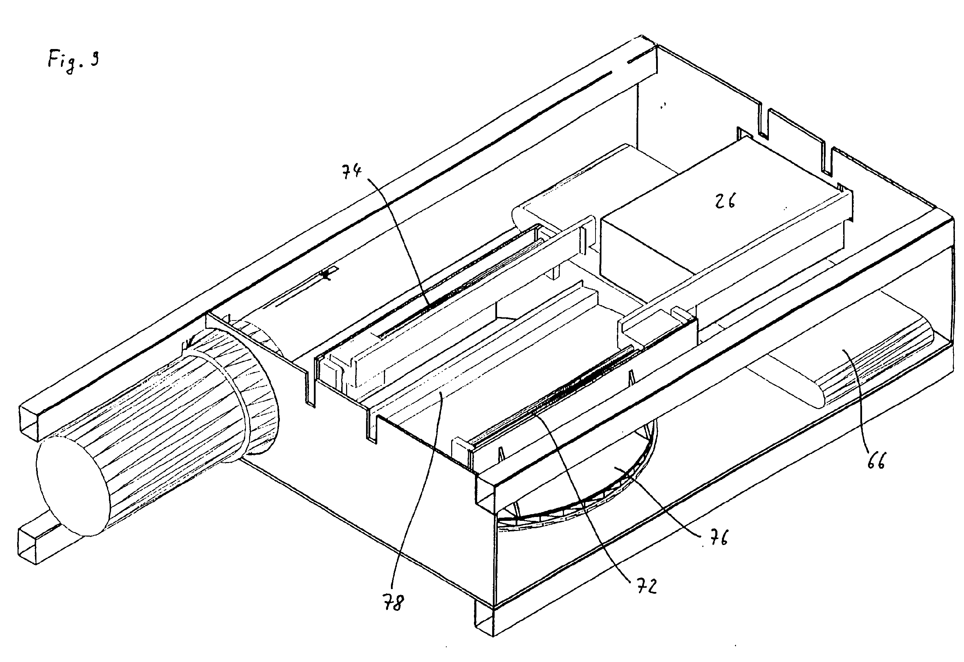

Fig. 8 und 9 erläutern ein Regalfahrzeug 8 (Fig. 1), wobei lediglich ein Senkrechtschlitten bzw. Lastaufnahmemittel des Regalfahrzeugs in unterschiedlichen Perspektiven dargestellt ist, welches dem Transport eines Gegenstands oder auch eines leeren oder mit einem Gegenstand beladenen Lagerfahrzeugs in vertikaler Richtung dient.

Der im ganzen mit 60 bezeichnete Senkrechtschlitten ist entlang nicht dargestellter Vertikalführungen des Regalfahrzeugs mit Zahnriemen 62 in senkrechter Richtung bewegbar, während das Regalfahrzeug als Ganzes in horizontaler Richtung 64 (Fig. 1) z.B. auf Schienen verfahrbar ist.

Der Senkrechtschlitten 60 weist ein quer zur Längsrichtung 64 in beiden Richtungen antreibbares Plattenband 66 auf, um einen auf der Fördereinrichtung 12 (Fig. 1) herantransportierten Gegenstand aufnehmen oder einen Gegenstand auf diese abgeben zu können. Von dem Plattenband 66 gelangt ein Gegenstand 26 durch längsverfahrbare Arme 68, 70 zweier Lineareinheiten 72, 74 auf eine um eine vertikale Drehachse drehbare Drehscheibe 76. Die Lineareinheiten 72, 74 mit den ausfahrbaren Armen 68, 70 sind auf der Drehscheibe 76 angebracht und mit dieser drehbar, so daß ein aufgenommener Gegenstand 26 anschließend quer zur Längsrichtung in der einen oder anderen Richtung in einen ausgewählten Lagerkanal geschoben werden kann. Mitnehmer 78 auf den Armen 68, 70 erleichtern das Erfassen eines Gegenstands 26.

Wie Fig. 8 weiter zeigt, sind die Arme 68, 70 unabhängig voneinander ausfahrbar, wobei der Arm 68 der Lineareinheit 72 ausgefahren und der Arm 70 der Lineareinheit 74 eingefahren dargestellt ist, so daß der ausgefahrene Arm 68 einen Anschlag für einen auf dem Plattenband 66 herantransportierten Gegenstand bildet. Nachdem der Gegenstand in die dargestellte Stellung bewegt worden ist, fährt auch der andere Arm 70 aus, damit der Gegenstand mit Hilfe beider Arme auf die Drehscheibe gezogen werden kann.

Um einen Gegenstand 26 aus dem Lager 1 auszulagern, fährt ein mit dem Gegenstand beladenes Lagerfahrzeug 30 mit der Fahreinheit voran aus einem Lagerkanal 28 auf die Drehscheibe 76, die hierfür gegenüber der dargestellten Stellung um 90° verdreht und mit dem entsprechenden Lagerkanal ausgerichtet wird. Die Drehscheibe 76 weist, entsprechend den Tragprofilen 16 in jedem einzelnen Lagerkanal 28, zwei gegenüberliegende Tragprofile 78 auf, die in gegenüber Fig. 8 um 90° verdrehter Drehscheibenstellung die Gasse 2 teilweise überbrücken, so daß das Lagerfahrzeug vollständig auf die Drehscheibe 76 fahren kann. Durch Absenken der Hubplattform 54 wird der Gegenstand auf der Drehscheibe 76 abgesetzt und kann mit Hilfe der Lineareinheiten und des Plattenbands 66 der Fördereinrichtung 12 zugeführt werden.

Alternativ kann ein leeres oder mit einem Gegenstand beladenes Lagerfahrzeug von einem Lagerkanal übernommen und zwecks Aufnahme oder Abgabe eines Gegenstands an anderer Stelle in einem anderen Lagerkanal abgesetzt werden, nachdem es ggf. um 180° gedreht worden ist, wenn der andere Lagerkanal auf der anderen Seite der Gasse 2 liegt.

Das Lagerfahrzeug kann in an sich bekannter Weise über ein Kabel mit dem Regalfahrzeug verbunden sein, oder es kann selbständig fahrbereit sein und bspw. eine Funkfernsteuerung aufweisen.

### Bezugszeichenliste

- 1: Lager
- 2: Gasse
- 4, 6: Lagerregal
- 8: Regalfahrzeug
- 10: Schiene
- 12: Fördereinrichtung
- 14: Seitenwand
- 16: Tragprofil
- 18, 20: horizontal verlaufender Abschnitt
- 19, 21: vertikal verlaufender Abschnitt
- 22: obere Laufbahn
- 24: untere Laufbahn
- 26: Gegenstand
- 28: Lagerkanal
- 30: Lagerfahrzeug
- 32: Fahreinheit
- 34: Hubeinheit
- 36: Kopplung
- 38: Laufrad
- 39: Laufebene
- 40: Tragrad
- 41: Tragebene
- 42, 44: Führungsrad
- 46: Schwenkachse
- 48: Befestigungsschlitten
- 50: Führung
- 51: Pfeil
- 52: Unterplatte
- 54: Oberplatte (Hubplattform)
- 56: Verbindungsmittel
- 58: Sicherungsriegel
- 62: Zahnriemen
- 64: Pfeil (Längsrichtung)
- 66, 68: Arm
- 72, 74: Lineareinheit
- 76: Drehscheibe
- 78: Tragprofil

- h: Höhe (von 34)
- H: vertikaler Abstand (22/41 und 24/39)
- Hv: vertikaler Abstand (zwischen 22 und 16)
- L: horizontaler Abstand (zwischen 22 und 24)
- W1: Spurweite (von 22 bzw. 38)
- W2: Spurweite (von 24 bzw. 40)

## Patentansprüche

1. Lagerfahrzeug (30) zum Betrieb in einem Regallager (1) mit einer mit mindestens einem Antriebsmotor und Laufrädern (38) versehenen Fahreinheit (32) und einer mit Tragrädern (40) und einer anheb- und absenkbaren Hubplattform (54) versehenen Hubeinheit (34), wobei die Laufräder (38) zum Abrollen auf einer Laufebene (39) angeordnet sind, die oberhalb einer Tragebene (41) liegt, auf der die Tragräder abrollen.

2. Lagerfahrzeug nach Anspruch 1, **dadurch gekennzeichnet, daß** die Laufräder (38) eine größere Spurweite (W1) aufweisen als die Tragräder (40).

3. Lagerfahrzeug nach Anspruch 1 oder 2, **dadurch gekennzeichnet, daß** die Laufebene (39) einen vertikalen Abstand (H) von der Tragebene (41) aufweist, der mindestens einer Bauhöhe (h) der Hubeinheit (34) entspricht.

4. Lagerfahrzeug nach Anspruch 1, 2 oder 3, **dadurch gekennzeichnet, daß** Fahreinheit (32) und Hubeinheit (34) über eine flexible Kopplung (36) miteinander verbunden sind.

5. Lagerfahrzeug nach Anspruch 4, **dadurch gekennzeichnet, daß** die Kopplung (36) eine Winkelverlagerung zwischen Fahr- und Hubeinheit (32, 24) um eine horizontale (46) und/oder eine vertikale Achse ermöglicht.

6. Lagerfahrzeug nach einem der Ansprüche 4 oder 5, **dadurch gekennzeichnet, daß** die Kopplung (36) eine begrenzte Relativbewegung zwischen Fahr- und Hubeinheit (32, 34) in vertikaler und/oder horizontaler Richtung ermöglicht.

7. Lagerfahrzeug nach einem der Ansprüche 4 bis 6, **dadurch gekennzeichnet, daß** Fahr- und Hubeinheit (32, 34) kardanisch miteinander verbunden sind.

8. Lagerfahrzeug nach einem der Ansprüche 4 bis 7, **dadurch gekennzeichnet, daß** die Hubeinheit (34) schwenkbar an einem an der Fahreinheit (32) vertikal verlagerbaren Befestigungsschlitten (48) angelenkt ist.

9. Lagerfahrzeug nach einem der vorangehenden Ansprüche, **dadurch gekennzeichnet, daß** ein Hubantrieb zum Anheben und Absenken der Hubplattform (54) in der Fahreinheit (33) integriert ist.

10. Lagerfahrzeug nach einem der vorangehenden Ansprüche, **dadurch gekennzeichnet, daß** die Hubeinrichtung (34) eine Unterplatte (52) und eine die Hubplattform (54) tragende oder bildende Oberplatte (54) aufweist, wobei Unter- und Oberplatte (52, 54) durch einen Hubantrieb gegeneinander bewegbar sind.

11. Lagerfahrzeug nach Anspruch 10, **dadurch gekennzeichnet, daß** zwischen Unter- und Oberplatte (52, 54) Keilflächen angeordnet sind, die bei einer horizontalen Relativbewegung zwischen Ober- und Unterplatte eine Vertikalbewegung der Oberplatte bzw. der Hubplattform (54) bewirken.

12. Lagerfahrzeug nach einem der vorangehenden Ansprüche, **dadurch gekennzeichnet, daß** Fahr- und/oder Hubeinheit (32, 34) mit seitlichen Führungsrädern (42, 44) versehen sind.

13. Lagerfahrzeug nach einem der vorangehenden Ansprüche, **dadurch gekennzeichnet, daß** die Laufräder (38) einen größeren Durchmesser als die Tragräder (40) aufweisen.

14. Lagerfahrzeug nach einem der vorangehenden Ansprüche, **dadurch gekennzeichnet, daß** an einer Stirnseite der Hubeinrichtung (34) ein Sicherungsriegel (58) für einen transportieren Gegenstand (26) angeordnet ist, der bei abgesenkter Hubplattform (54) eingezogen und bei angehobener Hubplattform ausgefahren ist.

15. Lagerfahrzeug nach Anspruch 14, **dadurch gekennzeichnet, daß** der Sicherungsriegel (58) durch die Bewegung der Unter- und Oberplatte (52, 54) zwangsgesteuert ist.

16. Lager (1) für Gegenstände (26) mit vorgegebenen Abmessungen, insbesondere Behälter für Kleinteile, mit horizontalen Lagerkanälen (28) zur Aufnahme der Gegenstände (26) und zum Verfahren eines Lagerfahrzeugs (30) nach einem der Ansprüche 1 bis 15, wobei jeder Lagerkanal (28) zwei einander gegenüberliegend angeordnete Tragprofile (16) aufweist, die jeweils zwei einen vertikalen Abstand (H) und einen horizontalen Abstand (L) und somit unterschiedliche Spurweite aufweisende, horizontale Laufbahnen (23, 24) bilden, **dadurch gekennzeichnet, daß** die Tragprofile (16) jeweils vier W-förmig abwechselnd um 90° gegeneinander abgewinkelte Abschnitte (18, 19, 20, 21) aufweisen, von denen ein erster (21) vertikal an einer Seitenwand (14) anliegt und an dieser befestigt ist und zwei (18, 20) horizontal angeordnet sind und die Laufbahnen (22, 24) bilden.

17. Lager nach Anspruch 16, **dadurch gekennzeichnet, daß** ein zwischen dem horizontal angeordneten Abschnitten (18, 20) liegender vertikaler Abschnitt (19) eine seitliche Führungsfläche für ein in dem Lagerkanal (28) betriebenes Lagerfahrzeug (30) bildet.

## Claims

1. Warehouse vehicle (30) for operation in a high-bay warehouse (1) with a drive unit (32) provided with at least one driving motor and running wheels (38) and a lifting unit (34) provided with supporting wheels (40) and a lifting platform (54) capable of being raised and lowered, the running wheels (38) being arranged for rolling off on a running plane (39) which lies above a supporting plane (41) on which the supporting wheels roll off.

2. Warehouse vehicle according to Claim 1, **characterised in that** the running wheels (38) have a larger track width (W1) than the supporting wheels (40).

3. Warehouse vehicle according to Claim 1 or 2, **characterised in that** the running plane (39) has a vertical distance (H) from the supporting plane (41) which corresponds at least to an overall height (h) of the lifting unit (34).

4. Warehouse vehicle according to Claim 1, 2 or 3, **characterised in that** the drive unit (32) and lifting unit (34) are connected to one another via a flexible coupling (36).

5. Warehouse vehicle according to Claim 4, **characterised in that** the coupling (36) enables an angular displacement between the drive and lifting units (32, 34) about a horizontal (46) and/or a vertical axis.

6. Warehouse vehicle according to one of Claims 4 or 5, **characterised in that** the coupling (36) enables a restricted relative movement between the drive and lifting units (32, 34) in the vertical and/or horizontal direction.

7. Warehouse vehicle according to one of Claims 4 to 6, **characterised in that** the drive and lifting unit (32, 34) are cardanically connected to one another.

8. Warehouse vehicle according to one of Claims 4 to 7, **characterised in that** the lifting unit (34) is pivotably coupled to a fastening slide (48) which is vertically displaceable on the drive unit (32).

9. Warehouse vehicle according to one of the preceding claims, **characterised in that** a lifting drive for raising and lowering the lifting platform (54) is integrated in the drive unit (32).

10. Warehouse vehicle according to one of the preceding claims, **characterised in that** the lifting apparatus (34) has a lower plate (52) and an upper plate (54) which supports or forms the lifting platform (54), the lower and upper plates (52, 54) being movable relative to one another by means of a lifting drive.

11. Warehouse vehicle according to Claim 10, **characterised in that** there are arranged between the lower and upper plates (52, 54) wedge surfaces which bring about a vertical movement of the upper plate or the lifting platform (54) in the event of a horizontal relative movement between the lower and upper plates.

12. Warehouse vehicle according to one of the preceding claims, **characterised in that** drive and/or lifting units (32, 34) are provided with lateral guide wheels (42, 44).

13. Warehouse vehicle according to one of the preceding claims, **characterised in that** the running wheels (38) have a larger diameter than the supporting wheels (40).

14. Warehouse vehicle according to one of the preceding claims, **characterised in that** a locking bolt (58) for a transported article (26) is arranged at one face of the lifting apparatus (34), which locking bolt (58) is retracted in the case of a lowered lifting platform (54) and is extended in the case of a raised lifting platform.

15. Warehouse vehicle according to Claim 14, **characterised in that** the locking bolt (58) is forcibly actuated by the movement of the lower and upper plates (52, 54).

16. Warehouse (1) for articles (26) with defined dimensions, in particular containers for small parts, with horizontal warehouse passages (28) for accommodating the articles (26) and for moving a warehouse vehicle (30) according to one of Claims 1 to 15, wherein each warehouse passage (28) has two supporting profiles (16) arranged opposite one another which respectively form two horizontal running paths (22, 24) having a vertical distance (H) and a horizontal distance (L) and thus a different track width, **characterised in that** the supporting profiles (16) respectively have four sections (18, 19, 20, 21) angled alternately to one another by 90° in a W-shape, of which sections a first (21) abuts vertically on a side wall (14) and is fastened thereon and two (18, 20) are arranged horizontally and form the running paths (22, 24).

17. Warehouse according to Claim 16, **characterised in that** a vertical section (19) lying between the horizontally arranged sections (18, 20) form a lateral guide surface for a warehouse vehicle (30) operated in the warehouse passage (28).

## Revendications

1. Chariot de transport pour entrepôt (30), pour fonctionner dans un entrepôt à rayonnages (1), avec une unité de déplacement (32) munie d'au moins un moteur d'entraînement et de roues de déplacement (38) et d'une unité de levage (34), munie de roues porteuses (40) et d'une plateforme de levage (54) levable et abaissable, les roues de déplacement (38) étant disposées pour rouler sur un plan de déplacement (39) situé au-dessus d'un plan de portage (41), sur lequel les roues porteuses roulent.

2. Chariot de transport pour entrepôt selon la revendication 1, **caractérisé en ce que** les roues de déplacement (38) présentent une voie d'écartement (W1) plus large que les roues porteuses (40).

3. Chariot de transport pour entrepôt selon la revendication 1 ou 2, **caractérisé en ce que** le plan de déplacement (39) présente, par rapport au plan de portage (41), un espacement (H) vertical correspondant au moins à une hauteur de construction (h) de l'unité de levage (34).

4. Chariot de transport pour entrepôt selon la revendication 1, 2 ou 3, **caractérisé en ce que** l'unité de déplacement (32) et l'unité de levage (34) sont reliées ensemble par l'intermédiaire d'un accouplement (36) flexible.

5. Chariot de transport pour entrepôt selon la revendication 4, **caractérisé en ce que** l'accouplement (36) permet un déplacement angulaire entre unité de déplacement (32) et unité de levage (34), autour d'un axe horizontal (46) et/ou d'un axe vertical.

6. Chariot de transport pour entrepôt selon l'une des revendications 4 ou 5, **caractérisé en ce que** l'accouplement (36) permet un déplacement relatif limité entre unité de déplacement (32) et unité de levage (34), en direction verticale et/ou horizontale.

7. Chariot de transport pour entrepôt selon l'une des revendications 4 à 6, **caractérisé en ce que** l'unité de déplacement (32) et l'unité de levage (34) sont reliées ensemble à la cardan.

8. Chariot de transport pour entrepôt selon l'une des revendications 4 à 7, **caractérisé en ce que** l'unité de levage (34) est articulée à pivotement sur un chariot de fixation (48) déplaçable verticalement sur l'unité de déplacement (32).

9. Chariot de transport pour entrepôt selon l'une des revendications précédentes, **caractérisé en ce qu'**un entraînement de levage est intégré dans l'unité de déplacement (32), pour lever et abaisser la plateforme de levage (54).

10. Chariot de transport pour entrepôt selon l'une des revendications précédentes, **caractérisé en ce que** le dispositif de levage (34) présente une plaque inférieure (52) et une plaque supérieure (54) portant ou formant la plateforme de levage (54), les plaques inférieure et supérieure (52, 54) étant déplaçables l'une par rapport à l'autre au moyen d'un entraînement de levage.

11. Chariot de transport pour entrepôt selon la revendication 10, **caractérisé en ce qu'**entre les plaques inférieure et supérieure (52, 54) sont disposées des surfaces de coin qui, dans le cas d'un déplacement relatif horizontal entre plaque supérieure et inférieure, provoquent un déplacement vertical de la plaque supérieure ou de la plateforme de levage (54).

12. Chariot de transport pour entrepôt selon l'une des revendications précédentes, **caractérisé en ce que** les unités de déplacement et/ou de levage (32, 34) sont munies de roues de guidage (42, 44) latérales.

13. Chariot de transport pour entrepôt selon l'une des revendications précédentes, **caractérisé en ce que** les roues de déplacement (38) présentent un plus grand diamètre que les roues porteuses (40).

14. Chariot de transport pour entrepôt selon l'une des revendications précédentes, **caractérisé en ce que**, sur une face frontale du dispositif de levage (34), est disposé un verrou de sécurité (58) pour un objet (26) transporté, qui est rentré lorsque la plateforme de levage (54) est abaissée et est sorti lorsque la plateforme de levage est levée.

15. Chariot de transport pour entrepôt selon la revendication 14, **caractérisé en ce que** le verrou de sécurité (58) est l'objet d'une commande forcée, du fait du déplacement des plaques inférieure et supérieure (52, 54).

16. Entrepôt à rayonnages (1) pour des objets (26) ayant des dimensions prédéterminées, en particulier des récipient pour de petites pièces, avec des canaux d'entrepôt (28) horizontaux, pour recevoir les objets (26) et pour le déplacement d'un chariot de transport pour entrepôt (30) selon l'une des revendications 1 à 15, chaque canal d'entrepôt (28) présentant deux profilés support (16) disposés l'un en regard de l'autre, formant chacun deux pistes de déplacement (22, 24) horizontales présentant un espacement vertical (H) et un espacement horizontal (L), et ainsi une voie d'écartement différente, **caractérisé en ce que** les profilés support (16) présentent chacun quatre tronçons (18, 19, 20, 21) en forme de W, coudées alternativement à 90° les uns par rapport aux autres, dont un premier (21) appuie verticalement sur une paroi verticale (24) et est fixé à celle-ci, et deux (18, 20) sont disposés horizontalement et forment les pistes de déplacement (22, 24).

17. Entrepôt à rayonnages selon la revendication 16, **caractérisé en ce qu'**un tronçon (19) vertical, situé entre les tronçons (18, 20) disposés horizontalement, forme une surface de guidage latérale pour un chariot de transport pour entrepôt (30) actionné dans le canal d'entrepôt (28).
